# EUROPEAN PATENT APPLICATION

(11) **EP 2 343 923 A1**
(43) Date of publication of application: **13.07.2011**
(21) Application number: 10305033.2
(22) Date of filing: 12.01.2010
(51) Int. Cl.: H04W 36/14, H04W 36/36

(54) **Quality measurement management for inter-RAT handover in a mobile telecommunication device**

(71) Applicant: ST-Ericsson (France) SAS, 38000 Grenoble (FR); ST-Ericsson SA, 1228 Plan-les-Ouates (CH)
(72) Inventor: Seguie, Alain, 72300, LOUAILLES (FR); Coutant, Jérôme, 72220, SAINT GERVAIS EN BELIN (FR); Vanherpe, Matthieu, 72100, LE MANS (FR)
(74) Representative: Cabinet Plasseraud

(57) **Abstract**

A method for managing measurements of quality of communication on mobile telecommunication networks, the method comprising the following steps performed by a mobile communication device (10):
- performing a first measurement of a first parameter (RSCP) representing a first quality of communication in a first mobile network (3G,UMTS) over which the terminal is currently communicating;
- triggering a measurement process when the first parameter is below a first threshold 3G_T1, said measurement process comprising a measurement of a second parameter (RXLEV) representing a second quality of communication on a second mobile network (2G,GSM), and sending a measurement result to a management unit (15) of the first mobile network ;
- performing a second measurement of the first parameter (RSCP);
- determining whether a measurement result of the second measurement is above a second threshold 3G_T2; and
- stopping sending results of the measurement process if the measurement result of the second measurement is above the second threshold (3G_T2).

## Description

### Technical Field

The present invention relates to the management of quality measurement procedures in a mobile telecommunication device.

In particular, the present invention relates to improvements in the management of quality measurement in the context of handovers from a Third Generation (3G) network to a Second Generation (2G) network during an ongoing communication.

### Background of the invention

In mobile telecommunications, several types of networks are coexisting. A same Telecommunication service provider may control a 3G network (UMTS) as well as a 2G network (GSM).

In the specifications of standards such as 3GPP, there are provided handover processes for transferring a communication from the 3G network to the 2G network when communication quality is decreasing in the 3G network as a means for avoiding loosing the communication.

### Prior art

When a mobile telecommunication device is performing a 3G communication, it also performs quality measurements (such as measuring the EcN0 or RSCP parameters). It then sends the measurements to a management unit of the network.

When the management unit detects that quality of the communication over the 3G network is decreasing too much, it requests the device to perform measurements of quality of the communications over the 2G network.

Then, the device performs the requested measurements (such as measuring the RxLev parameter), and sends them to the management unit of the network.

If the management unit of the network considers that communication quality is acceptable on the 2G network, it requests the device to transfer the communication from the 3G network to the 2G network.

This type of handovers, called "interRAT handovers" (inter Radio Access Technology handovers), particularly occurs when, due to the deployment of the 3G technology, the 3G network covers a geographical area which is smaller than the geographic area covered by the 2G network, and the device is moving from a zone where it was covered by both the 3G and 2G networks to a zone that is covered only by the 2G network. It also occurs when quality is not the same on 2G and 3G cells covering a same area because of load conditions or other factors that may affect the quality of the communications.

According to the actual specifications of the 3G standards, however, once the quality measurement in the 2G network is triggered, and even if quality becomes acceptable again in the 3G network, the communication is inevitably transferred. This results in a loss of potential services for the user, namely the services of the 3G network which are not available in the 2G network.

### Summary of the invention

There is a need for enhancing quality measurement processes in mobile telecommunication devices so as to avoid useless interRAT handovers.

To that purpose there is provided, according to a first aspect of the invention, a method for managing measurements of quality of communication on telecommunication networks, the method comprising the following steps performed by a communication terminal:
- performing a first measurement of a first parameter representing a first quality of communication in a first network over which the terminal is currently communicating;
- triggering a measurement process when the first parameter is below a first threshold, said measurement process comprising a measurement of a second parameter representing a second quality of communication on a second network, and sending a measurement result to a management unit of the first network ;

- performing a second measurement of the first parameter;
- determining whether a measurement result of the second measurement is above a second threshold; and
- stopping sending results of the measurement process if the measurement result of the second measurement is above the second threshold.

According to the invention, handovers are avoided when quality has got better again in the first network. Indeed, when the first parameter has got above the second threshold, the terminal stops sending the measurement results to the network. This may be interpreted by the network as a loss of connection to the second network which leads to the conclusion that handover is impossible. Hence, any handover process initiated because the first parameter has got below the first threshold shall be interrupted. For example, the triggering step comprises the steps of:
- sending a measurement result of the first measurement to the management unit; and
- receiving a request from the management unit for triggering the measurement process.

The handover process may further comprise stopping performing the measurement of the second parameter if the measurement result of the second measurement is above the second threshold.

According to other aspects of the invention, there is also provided:
- a computer program comprising instructions for executing a method according to the first aspect when the program is executed by a processor;
- a computer program product for storing the computer program; and
- a device for implementing a method according the first aspect.

These objects provide at least the same advantages as those associated to the method.

Other advantages are obtained by additional features which are recited in the dependent claims attached hereto.

### Brief description of the drawings

Other features and advantages of the invention will become apparent from the following description of non-limiting exemplary embodiments, with reference to the appended drawings, in which:
- Figure 1 is a schematic illustration of a context of implementation of embodiments of the invention;
- Figure 2 is a schematic illustration of the evolution of the power of the communication signals as perceived by a terminal;
- Figures 3a and 3b illustrate, respectively for the prior art and for an embodiment of the invention, the chronology of the different events related to a handover process ;
- Figure 4 illustrates the data flows exchanged between a terminal and a management unit of a communication services provider according to an embodiment of the invention;
- Figure 5 is a flowchart illustrating steps of a method according to embodiments of the invention; and
- Figure 6 is a schematic illustration of a device according to embodiments of the present invention.

### Detailed description of embodiments of the invention

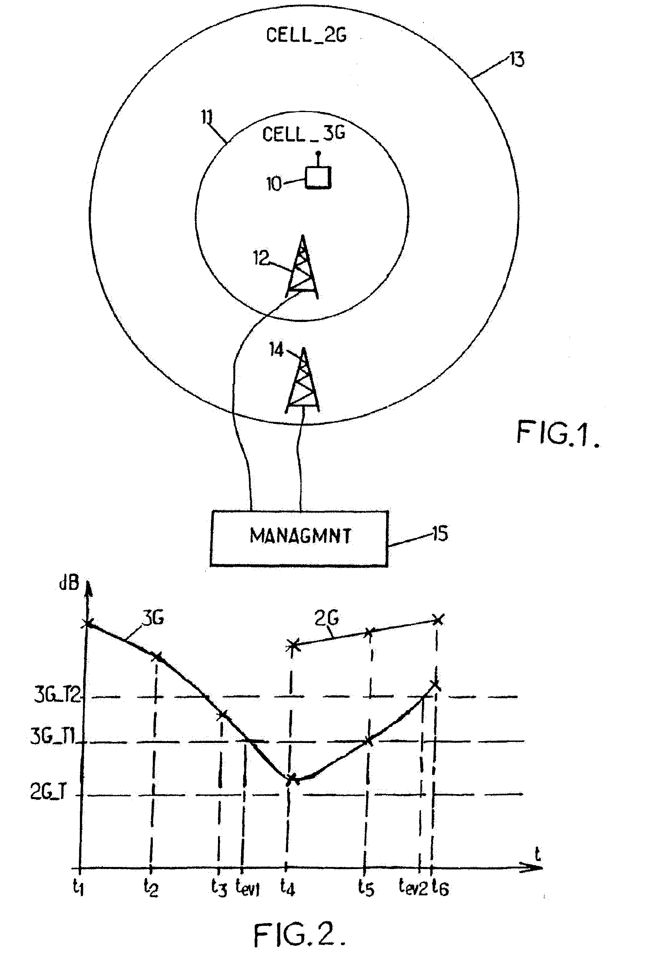

Figure 1 illustrates a context of implementation of embodiments of the invention. In this context, the evolution of quality is due to a state of load evolution, a change in the environment, or other factors.

In the context of Figure 1, a mobile telecommunication device 10 is in a coverage area 11 of a first network element 12 (such as a Node B) of a 3G telecommunication network. It is also in a coverage area 13 of a second network element 14 (such as a BTS) of a 2G network. Network elements 12 and 14 are connected to a management unit 15 which manages communications over the 3G and 2G networks.

In coverage area 12, the quality of communication is not uniform. For example, the power of the communication signals is not uniform. The power of these signals decreases with the distance to network element 12, or with time. Hence, terminal 10 does not always have same conditions for its communications. The terminal may be momentarily in a gap of coverage of the 3G network, and getting out of that gap of coverage rapidly. According to the present embodiment of the invention, the communication over the 3G network will not be lost, even in the presence of this gap.

In the following, the power of the communication signals is considered as a means for measuring quality of communications. It is to be understood, however, that this is a non limiting example only, because other parameters or information can be considered, such as the bit error rate (BER), the signal to noise ration (EcN0), etc.

Figure 2 shows a graph that illustrates the evolution of the power of the communication signals as perceived by terminal 10 of Figure 1 with time, for both the 3G network (curve named "3G") and the 2G network (curve named "2G").

When the power of the communication signals of the 3G network (for example the RSCP) is below a threshold value "3G_T1", the management unit 15 requests terminal 10 to perform power measurements in the 2G network (such as measuring the RxLev parameter). When the power of the communication signals of the 3G network is above threshold value "3G_T2", and that a measurement of power in the 2G network has been requested, terminal 10 stops reporting the measurements.

The determination of the 3G_T1, and 3G_T2 values depends on the network specificities. The person with ordinary skill in the art shall be able to determine such values, based for example on standard specifications such as 3GPP.

At instant t1, while performing a communication over the 3G network, the terminal measures an RSCP value that is above threshold value 3G_T1, hence communication may continue normally. This is also the case at instants t2 and t3. At instant t4, RSCP is below threshold 3G_T1, then the management unit 15 requests terminal 10 to perform RxLev measurements in the 2G network. At instant t4, RxLev is above threshold value 2G_T, and then a handover to the 2G network is launched by the management unit. At instant t5, RSCP has got above threshold 3G_T1 but is below threshold 3G_T2 and RxLev is still above threshold 2G_T. Then, the handover process continues. At instant t6, RSCP is above threshold 3G_T2. Then, terminal 10 stops sending RxLev values to the management unit. Hence, the power of the communication signals in the 3G network decreases until instant t4 and then increases. The power of these signals gets below threshold 3G_T1 at tₑᵥ₁ and get above threshold 3G_T2 at tev2.

As the management unit does not receive RxLev values any longer, it stops the handover process.

In the prior art, RxLev measurements would have continued. This would have made the management unit terminate the handover process, and so even though RSCP has got better. On the contrary, here, a useless handover is avoided.

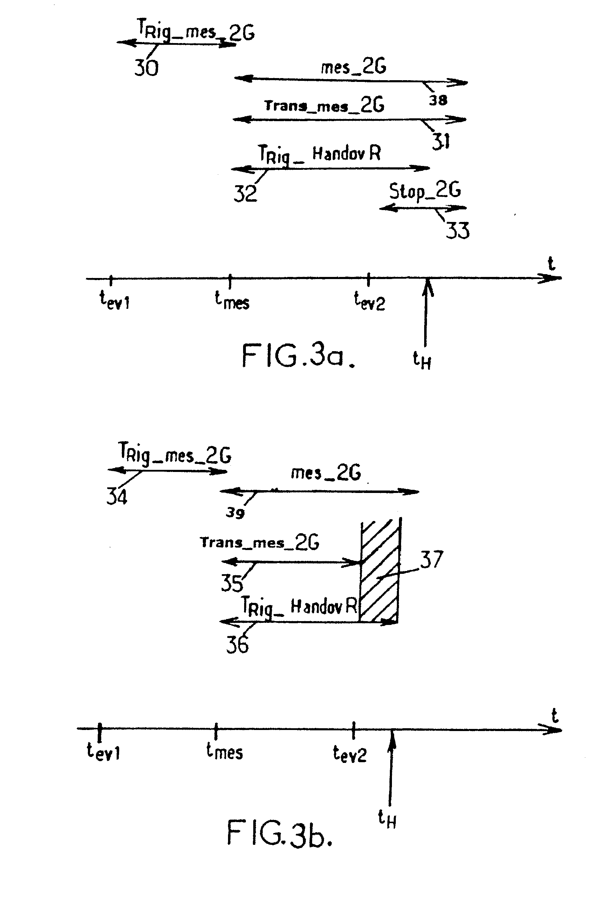

Figures 3a and 3b illustrate, respectively for the prior art and for the present embodiment, the chronology of the different events related to the handover process.

In the prior art, as illustrated by Figure 3a, the RxLev measurements are triggered in a step 30. This step comprises processing performed by the network and synchronisation between the terminal and the 2G network. Due to communication time between the terminal and he management unit, and to processing time, this triggering process ends at tₘₑₛ. At that instant tₘₑₛ, measurement process 38 begins. Concurrently, the transmission process 31 of these measurements begins. At the same instant tₘₑₛ, the decision process 32 is launched for deciding, based on the results of the measurement process, whether or not a handover should be performed. At instant tₑᵥ₂, measurement process 31 and decision process 32 are still running. At instant tₑᵥ₂ a process 33 for stopping RxLev measurements is launched. However, the decision process 32 ends during process 33 and a handover is performed at t_{H}. Then, when process ends and process 31 and 38 are terminated, handover has already been performed.

In the present embodiment, as illustrated by Figure 3b, RxLev measurements are triggered in a step 34 at tₑᵥ₁. A measurement process 39, a transmission process 35 of the measurements and a decision process 36 for deciding, based on the results of the measurement process, whether or not a handover should be performed are launched at tₘₑₛ. In this embodiment, at tₑᵥ₂, the terminal stops by itself transmitting the RxLev measurements, without any stopping process such as process 33 of Figure 3a. Then, there is a period 37 during which the management unit does not receive RxLev measurements. It then considers that a handover is not possible and stops process 36 at t_{H}. Hence, handover is avoided. When the terminal stops sending the measurements, it may continue performing the measurements. Hence, in case a process 34 is launched again, measurements are already performed and ready to be sent.

In the present embodiment, terminal 10 is not completely dependent on decisions made by the management unit. On the contrary, in the prior art, the time processing of the management unit results in a delay that leads to a bad decision (that is performing a handover whereas quality of communication has got better.

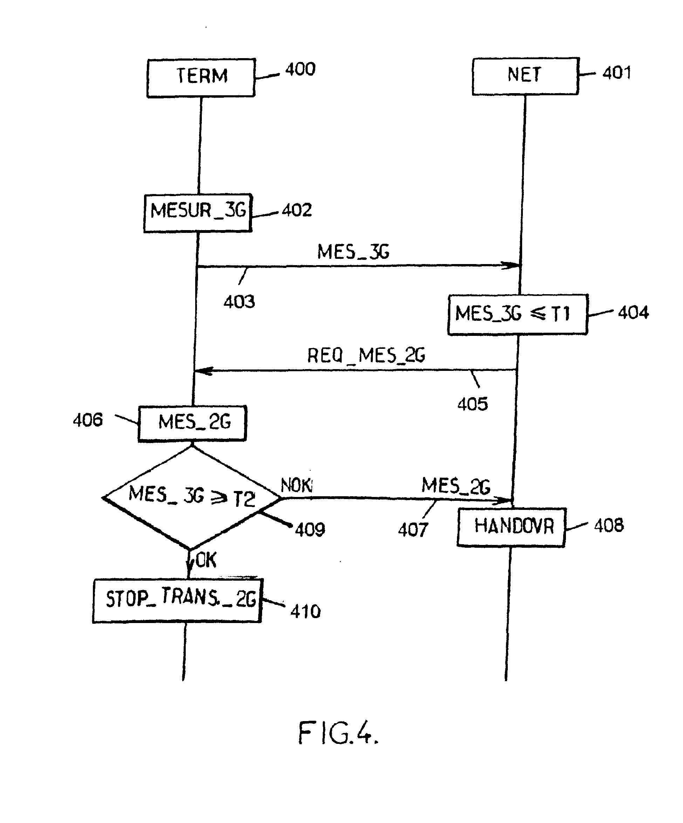

Figure 4 illustrates the data flows exchanged between a terminal 400 and a management unit 401 of a communication services provider.

Terminal 400 triggers a series of quality measurements in a step 402 for evaluating a quality of communication in a 3G telecommunication network controlled by management unit 401. Terminal 400 then periodically sends 3G quality measurements 403 to the management unit. Alternatively, the measurements may be sent only upon request of a management unit of the network.

The management unit processes measurements 403 in a step 404 and checks whether this quality is enough good. When quality is getting low, it sends a request 405 to the terminal 400 for performing quality measurements for evaluating a quality of communications in a 2G network controlled by management unit 401.

The terminal 400 then triggers the measurements in the 2G network in step 406. In step 409, the terminal checks whether or not quality has got better in the 3G network.

If quality has not got better, it sends 2G measurements 407 to the management unit 401 (alternatively, the measurements may be sent only upon request of the management unit). The management unit then triggers a decision process 408 for deciding, based on measurements 407 whether or not a handover should be performed.

If quality has got better, the terminal stops sending measurements 407 during step 410. As the management unit does not receive measurements any longer, it stops the handover decision process 408.

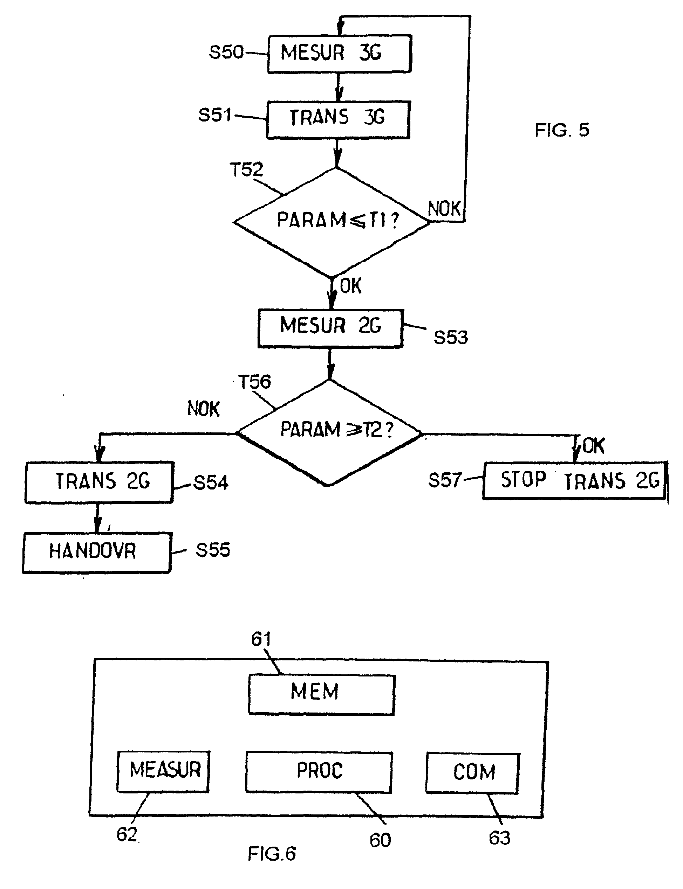

Figure 5 is a general flowchart that summarizes steps performed according to an embodiment.

In step S50 a mobile communication device performs a communication quality measurement on a network on which it is currently performing a communication, then it transmits the measurements to a management unit that controls its communications in a step S51.

In step T52, the management unit decides whether or not the quality on the network on which the communication is taking place is good. For example, it compares the measurements to a threshold value. If the measurements are above the threshold value, the measurement process goes on. If the measurements are below the threshold, the management unit requests the terminal to perform quality measurements on another network.

The terminal then performs quality measurement on the other network in step S53.

Then, the terminal performs a test on measurements obtained in step S50 for deciding whether or not quality has got better since the launch of step S53. For example, it compares the measurements to a threshold value in step T56. If the quality has got better, it stops in step S57 reporting the measurements of step S53.

If the quality has not got better, it transmits, in step S54, the measurements obtained during step S53 to the management unit. Upon receipt of these measurements, the management unit triggers a decision process in step S55 for deciding, based on measurement results of step S53 to transfer the communication from the current network to the other.

A computer program comprising instructions for executing the steps of the method described above may be designed based on an algorithm derived from the general flowchart depicted in Figure 5 and the present description.

Such a computer program may be based on the following pseudocode.

```
 Measurement_management()
      MEASUR_3G;
      TRANSMIT(M_3G);
      WHILE (2G_MEASURMNT_RQST = TRUE)
             MEASUR_2G;
      WHILE (M_3G < 3G_T2)
             TRANSMIT(M_2G);
       END;
 END;
```

When a communication is taking place on a mobile telecommunication device through a 3G network, the function Measurement_management() launches quality measurements on the 3D network by invoking a dedicated function MEASUR_3G. For example, function MEASUR_3G activates the measurement of the RSCP parameter. Function MEASUR_3G delivers periodically (or upon request of a management unit of the network) quality measurements M_3G. Once these measurements are obtained, a transmission function TRANSMIT() is called that takes the M_3G measurements as an argument and transmits them to the management unit of the network.

Then, a request from the management unit is awaited. When this request is received, a Boolean parameter 2G_MEASURMNT_RQST is set to TRUE. This parameter is set to FALSE upon receipt of a dedicated command from the management unit (for example when it does not need the measurements any longer). When this parameter is TRUE and the measurements are below a threshold 3G_T2, a measurement function MEASUR_2G is called that activates the measurement of quality of communication over the 2G network (for example measuring the RxLev parameter). Function MEASUR_2G delivers periodically (or upon request of a management unit of the network) quality measurements M_2G. Once these measurements are obtained, transmission function TRANSMIT() is called and takes the M_2G measurements as an argument and transmits them to the management unit of the network.

Hence, when M_3G values get above threshold 3G_T2, quality measurement on the 2G networks stops, and M_2G measurements are not sent to the management unit any longer.

Such a computer program may be stored in a memory of a mobile communication device for its execution by the control unit of the device.

Referring to Figure 6, a mobile communication device according to the present invention is described. The device comprises a processing unit 70 for implementing a method according to embodiments of the invention. To that purpose, the device comprises a memory unit 61. The memory unit may comprise several types of memory. For example, the memory unit may comprise a memory for storing processing data. The memory unit may also comprise a memory for storing a computer program according to embodiments of the invention. The device further comprises a measurement unit 62 for performing quality measurements on telecommunication networks. For example, the measurement unit may be able to measure RSCP or RxLev parameters. The device also comprises a communication unit 63 for performing communications over the networks.

While the invention has been illustrated and described in details in the drawings and foregoing description, such illustration and description are to be considered illustrative and exemplary only, the invention being not restricted to the disclosed embodiments. Other variations to the disclosed embodiments can be understood and effected by those skilled in the art in practicing the claimed invention, from a study of the drawings, the disclosure and the appended claims.

In the claims, the word "comprising" does not exclude other elements or steps, and the indefinite article "a" or "an" does not exclude a plurality. A single processor or other unit may fulfil the functions of several items recited in the claims. The mere fact that different features are recited in mutually different dependent claims does not indicate that a combination of these features cannot be advantageously used. Any reference signs in the claims should not be construed as limiting the scope of the invention.

## Claims

1. A method for managing measurements of quality of communication on telecommunication networks, the method comprising the following steps performed by a communication terminal:
- performing (S50) a first measurement of a first parameter representing a first quality of communication in a first network over which the terminal is currently communicating;
- triggering (S53) a measurement process when the first parameter is below a first threshold, said measurement process comprising a measurement of a second parameter representing a second quality of communication on a second network, and sending (S53) a measurement result to a management unit of the first network ;
- performing (S50) a second measurement of the first parameter;
- determining (T56) whether a measurement result of the second measurement is above a second threshold; and
- stopping (S57) sending results of the measurement process if the measurement result of the second measurement is above the second threshold.

2. A method according to claim 1, further comprising the steps of:
- sending a measurement result of the first measurement to the management unit; and
- receiving a request from the management unit for triggering the measurement process.

3. A method according to any one of the preceding claims, further comprising stopping performing the measurement of the second parameter if the measurement result of the second measurement is above the second threshold.

4. A computer program comprising instructions for implementing the steps of a method according to any one of claims 1 to 3 when loaded and run on computer means of a mobile telecommunication device.

5. A device comprising:
- a communication unit (63) for communicating over a first and a second telecommunication networks;
- a control unit (60) for managing measurements of quality of communication over the first telecommunication network and a second telecommunication network;
wherein the control unit is configured for managing the measurements according to any one of claims 1 to 3.
